# EUROPEAN PATENT SPECIFICATION

(11) **EP 4 047 775 B1**
(45) Date of publication and mention of the grant of the patent: **02.07.2025**
(21) Application number: 21158590.6
(22) Date of filing: 23.02.2021
(51) Int. Cl.: H02J 3/38, G05B 15/02, G06F 1/26, H02J 7/00, H02J 7/34, H02J 13/00, H04W 52/02, H02J 7/35, H02J 9/00

(54) **ON-SITE ENERGY MANAGEMENT SYSTEM FOR AN ENERGY-AUTONOMOUS CELL SITE**
SYSTEM ZUR VOR-ORT-ENERGIEVERWALTUNG FÜR EINEN ENERGIEAUTONOMEN MOBILFUNKSTANDORT
SYSTÈME DE GESTION D'ÉNERGIE SUR SITE POUR UN SITE CELLULAIRE AUTONOME EN ÉNERGIE

(43) Date of publication of application: 24.08.2022
(73) Proprietor: Deutsche Telekom AG, 53113 Bonn (DE)
(72) Inventor: SCHMITT, Sonja, 53173 Bonn (DE); ENTSTRASSER, Norbert, 1150 Vienna (AT); SPIEKER, Veronika, 64287 Darmstadt (DE); HANSLIK, Lelia, 10115 Berlin (DE); BENDIEK LARANJO, Ana, 01099 Dresden (DE); BINIAS, Michelle, 70806 Kornwestheim (DE); GEBHARD, Johanna, 85748 Garching bei München (DE)
(74) Representative: RDL Patentanwälte PartG mbB

(56) References cited:
- US-A1- 2011 125 336
- US-A1- 2013 134 922
- US-A1- 2014 274 219

## Description

### Technical field

The invention relates to an on-site energy management system, EMS, for an energy autonomous cell site in a cellular network. The invention further relates to an energy autonomous cell site in a cellular network with an on-site energy management system, a method for controlling an energy autonomous cell site and a computer program product.

### Background of the invention

EP 1 610 441 A2 describes a radio base station for mobile cellular telephony. The radio base station comprises a radio transceiver system, plants for generating electric energy from solar energy and wind energy, a battery set comprising a plurality of cells that co-operates with said plants for storing the generated electric energy and feeding said radio transceiver system and a monitoring device for monitoring said battery set and preventing malfunctions adapted to actively interact in a selective way with each cell of the battery set so as to maintain the charge in each cell within a preset deviation from a predetermined average voltage.

US 2014/274219 A1 describes a telecommunication power system with a battery re-charge bus connected to a load bus via a plurality of contactor control paths. The telecommunication power system continuously cycles battery strings as primary power for loads at telecommunication sites in conjunction with utilizing alternate power sources as secondary power for the loads at the telecommunication sites. The telecommunication power system may be installed in a telecommunication site without removing an existing lead-acid rectifier system.

US 2011/125336 A1 refers to a supervisory system controller for controlling and monitoring the generation of electrical energy from renewable sources and management methods for the storage of energy so generated and interconnecting the energy-generating elements, storage and load. The supervisory system controller operates to maximum the power transfer from a wind turbine to a battery by automatically varying the threshold levels at which turbine dump loads are switched based on system inputs and measurements.

However, on a cell site that is supplied completely autonomously by renewable energy, e.g. by wind energy, solar energy, or by a fuel cell, on site, it is currently not possible to manage all the different power (energy) sources and to react to the power demand in the cellular network.

As a consequence, the cell site may be easily insufficiently supplied by the energy source allocated to the cell site and may easily fail when the power goes off.

It is therefore an object of the present invention to suggest a possibility to implement control between electricity production, electricity storage and electricity consumption at the radio base station, i.e. at the cell site in a cellular network.

### Summary of the invention

A first aspect of the invention is an on-site energy management system, EMS, for an energy autonomous cell site in a cellular network wherein the cell site comprises at least one energy supply unit, at least one energy storage unit, and as at least one consumer at least one radio transceiver unit, wherein the EMS comprises at least:
- a decision logic module with data acquisition means and data processing means wherein the decision logic module is implemented on at least one computing device that can be integrated in the cell site or is at least operably coupled to the cell site, wherein the decision logic module is configured to be iteratively executed at a given time interval wherein each iteration initiates at the cell site in parallel controlling energy distribution, energy storage and energy reduction, by acquiring, using the data acquisition means, at least data about current energy generation and consumption at the cell site, current energy storage capacity at the cell site and current energy reduction commands for the cell site, and providing, using the data processing means, respective energy distribution control data, energy storage control data and energy reduction control data,
- an interface module that is implemented on the computing device that can be integrated in or is operably coupled to the cell site wherein the interface module is configured to detect the respective control data and to initiate, depending on the control data, altering an operating condition of/at the cell site and/or providing a status information about the cell site in response to the control data,
wherein controlling the energy storage comprises constantly monitoring, by the EMS, and analysing, by an energy storage management logic as a component of the decision logic module of the EMS, the current storage capacity on the cell site, calculating, by the energy storage management logic, a worst-case discharge time, t_crit, where the energy storage unit is estimated to be completely discharged, retrieving a service time from site specific settings, the service time being the time that is needed to refill the energy storage unit by an emergency service, comparing the worst-case discharge time with the service time and if the worst-case discharge time is smaller or equal to the service time, sending, by the energy storage management logic, an emergency notification and requesting, by the energy storage management logic, the emergency service to refill the energy storage unit.

The wording "operably coupled to" means that the respective component is connected to another component in such a way that an operation can be fulfilled, i.e. that the respective component has an effect on the other component and/or the other component's operations.

The wording "altering an operating condition of/at the cell site" includes any influence or effect the control data have on the cell site, particularly on its different components, such as the radio transceiver unit, the energy supply unit and the energy storage unit. The wording "providing status information about the cell site" includes "issuing any kind of notification concerning the cell site", possibly while maintaining the current operating condition/status of the cell site.

The term "cell site" includes the radio base station with all its components, such as radio transceiver unit, energy storage unit, energy supply unit, and further possible functional parts, such as antennas, and further indicates a location of the radio base station within the cellular network. The terms "cell site" and "radio base station" might be used synonymously herein. A cell site is defined as an entire set of equipment needed to receive and transmit radio signals for cellular voice and data transmission. A cell site typically includes transmitters, receivers, power amplifiers, combiners, filters, a digital signal processor, an energy supply unit, an energy storage unit and network interface modules. A cell site includes an antenna equipment and ground equipment that is used to transmit cell phone signals to and from a mobile device back to a respective receiver. This equipment is likely to include transmitters, receivers, GPS, a base transceiver station (BTS), backup power sources (energy storage unit), and more.

Any model for the energy management of a cell site depends on data that is processed and gathered on different levels, sometimes locally directly at the cell site and sometimes centrally through a respective network management, i.e. through a network manager of the cellular network. In any energy management model of a cell site, a decision must be made on where to process and store data, centrally in the network management or decentralized at the respective cell site. Generally, data processing can be divided into three processing steps: analysis, decision and action.

Each cell site within a cellular network differs in terms of equipment, location, maximum energy consumption and maximum energy generation. This site-specific data is stored centrally in the network manager of the cellular network. The on-site energy management system queries this site-specific data before the cell site is commissioned and is configured with these parameters.

Large amounts of external raw data such as weather data or data regarding extraordinary events, like fairs, sport events, traffic schedules, are processed centrally in the network manager. In the network manager, the data is at first filtered for the respective cell site using the site-specific settings and then analysed. A goal of the analysis is to calculate whether a higher energy generation and/or energy reduction is foreseeable. This is transmitted to the energy management system at the cell site in question so that less energy has to be taken from the energy storage unit of the cell site.

The proposed energy management system is an on-site solution that makes decisions based on energy consumption data measured on site and external calculation results. The decisions include energy optimization in regular operation of the cell site as well as measures in critical condition of the cell site and trigger actions on component level within the cell site.

Advantageously, the cell site is supplied through a renewable energy plant. That means that all consumers at the cell site, particularly the radio transceiver, i.e. the radio transceiver unit is supplied based on an utilisation of electric energy taken from renewable energy sources, like solar and wind energies, which in combination are used to feed the radio transceiver unit.

Such an electric energy supply unit exploiting a photovoltaic source and/or a wind energy source has optimum performance when it is installed in sunny and windy places. These conditions are generally met on high grounds where cell sites are located, i.e. where the respective radio base stations and the related antennas are mounted. Due to the proposed energy management system the cell site realized according to the present invention has the peculiarity of working autonomously also in case of particularly unfavorable climatic conditions.

In a preferred embodiment of the proposed energy management system, controlling energy distribution comprises handling a power connection between the at least one energy supply unit and the at least one consumer on the cell site, and requesting with each iteration for a current amount of energy generation of the at least one energy supply unit as input and for a current amount of required energy of the at least one consumer as output and deciding in terms of the respective energy distribution control data on a current energy distribution to be made on the basis of a comparison of the input and output.

In still a further embodiment, of the energy management system, deciding on a current energy distribution on the cell site comprises: a) in the case that the input is equivalent or larger than the output, allowing an energy supply from the energy supply unit to the at least one consumer, b) in the case of an energy excess, initiating a transfer of the additional energy into the energy storage unit of the cell site, and c) in the case the input is insufficient to cover the required energy, initiating establishing a connection to the energy storage unit of the cell site, particularly only after executing a control logic.

As mentioned above, the proposed energy management system comprises a decision logic, i.e. a decision logic module, which is executed at a given time interval, particularly in the range of 15 - 30 min, i.e. the decision logic module is repeated at given time intervals. Each iteration initiates the parallel execution of three tasks: the energy distribution, the energy storage management and the energy reduction management.

The energy distribution handles the power connection between the renewable energy generators, i.e. the at least one energy supply unit, and the at least one consumer, preferably multiple consumers on cell site. Every iteration starts with a request for the current amount of energy generated (input) and of energy required (output), which are compared in the EMS. In the ideal case a), the input is equivalent or larger than the output. The EMS allows the power supply, i.e. the energy supply from the renewable energy sources (the at least one energy supply unit) to the consumers. In case of an energy excess in case b), the additional energy is fed into the cell site's energy storage unit. In the event the generated energy is insufficient to cover the consumers, corresponding to case c), a connection to the energy storage unit is established through the EMS. Before using the energy storage unit as a supplementary energy source, according to a preferred embodiment, a control logic is triggered.

According to a further embodiment of the proposed on-site energy management system, controlling energy storage of the at least one energy storage unit comprises constantly monitoring and analysing the current storage capacity on the cell site and calculating a worst-case discharge time as well as a predicted discharge time taking into account external data, generating notifications about potential outages and requesting, if necessary, an emergency service to refill the energy storage, i.e. the energy storage unit, manually.

Preferably, for identifying the time of potentially required emergency service, an energy storage management logic, i.e. the above mentioned control logic, as part of the decision logic module is executed wherein a time point t_crit where the energy storage unit is estimated to be completely discharged is calculated and a notification requesting the emergency service is sent in due time before the time point t_crit. "Due time" is site-specific because a respective time frame for the emergency service is also site specific and can vary from cell site to cell site.

According to still a further embodiment of the proposed on-site energy management system, the energy storage management logic further calculates a predicted capacity, precap@t_crit, of the energy storage unit at time point t_crit, using external data, such as predicted energy reduction and weather forecasts, and, derived therefrom, an expected energy consumption until the time point t_crit, and, when the predicted capacity reaches a site-specific threshold, triggers, particularly constantly, over the next iterations a warning until the notification requesting the emergency service is sent.

It is further preferably that variances of previous predictions of an energy storage capacity at a respective time point X from a respective true energy storage capacity at the respective time point X are taken into consideration when calculating the predicted capacity precap@t_crit of the energy storage unit at time point t_crit, with X being before t_crit in time.

The energy storage management ensures a continuous power supply of the cell site. It constantly analyzes the current storage capacity of the energy storage unit and calculates the worst-case discharge time as well as a predicted discharge time including external data. Based on this information, warnings and notifications inform of potential outages and request an emergency service to refill the storage, i.e. the energy storage unit manually. The emergency logic is explained in detail below.

The continuous energy supply of a cell site is a mandatory requirement. Up to now, in the case of an energy autonomous cell site with renewable sources such continuous energy generation was not always guaranteed. Energy storage units are supposed to cover time frames with decreased or lacking energy generation. However, in rare cases, the storage capacity might not be sufficient and discharge completely. In this emergency case, the energy storage unit must be recharged manually, e.g. by filling up a gas tank or exchanging empty batteries with charged ones. To identify the time of potentially required services, the above proposed energy storage management logic according to the present invention with an emergency notification and warning is included.

To prevent a cell site's energy storage unit from being completely depleted at any time, energy storage capacity is continuously monitored by the EMS. As a power outage has to be avoided under any circumstances, the time that can be bridged with the current energy storage under maximum discharge rate, i.e. no energy production, maximum energy consumption, is calculated. This leads to a time point t_crit, where the energy storage unit, e.g. a respective battery, is estimated to be completely discharged, i.e. its capacity is 0%. To ensure a flawless operation of the cell site, it has to be recharged before the energy storage capacity is exhausted. Therefore, several hours before the point of discharge, i.e. in due time, a notification has to be sent to a respective service provider to initiate the emergency recharge. As the time frame of such emergency service is site-specific, this parameter is requested from the cell site's "policies and site-specific settings" which are stored, as mentioned before, centrally in the network manager of the cellular network. By means of this site-specific time frame, it can be determined how long before the point of discharge t_crit, the notification has to be sent to the respective service provider.

Although the previous steps ensure a continuous energy supply of the cell site, the spontaneous emergency notification may be impractical due to its lack of predictability. Hence, in a further preferred embodiment of the proposed EMS a warning for the potential emergency notification is included in the EMS. For this purpose, a further variable predcap@t_crit (predicted capacity at time point t_crit) is introduced. Predcap@t_crit is calculated by the EMS using external data such as predicted energy reduction and weather forecasts (e.g. wind or sun). Based on these information, the expected energy consumption until the time point t_crit is estimated. As energy production and reduction is considered, the discharge rate decreases and the expected energy storage capacity pred-cap@t_crit will be larger than 0%.

The larger the expected energy storage capacity in the future, i.e. at time point t_crit, is, the more confident one can say that the emergency storage service will not be required. However, the lower expected energy storage capacity the more likely is the need for an emergency recharge, i.e. for the emergency storage service. A site-specific threshold that is requested/retrieved from the policies and site-specific guidelines stored centrally at the network manager, defines the time when a warning is triggered. If there are no major prediction changes, the warning will be triggered by the EMS, preferably constantly, over the next iterations until the emergency service request/notification is triggered.

The relevant site-specific parameters include the total (maximum) energy storage capacity, the maximal power consumption, the service time and the warning threshold. Variating these parameters define how conservative the energy storage at the respective cell site is managed, as e.g. high service times or high warning thresholds will trigger service warnings or notifications earlier. The generally applicable energy storage management logic can therefore be tuned individually according to the site-specific needs.

According to still a further embodiment of the proposed on-site energy management system, controlling energy reduction comprises allowing a communication of an energy reduction module as part of the decision logic module to the at least one consumer at the cell site, and as soon as an external energy reduction command informs about possible energy reduction phases, where e.g. the radio transceiver unit is not required, e.g. overnight, initiating a transfer of the energy reduction command to the at least one consumer at the cell site.

Preferably, controlling energy reduction comprises deciding for/against energy reduction steps, wherein the energy reduction steps comprise initiating in terms of respective control data a) shutting down the at least one consumer, particularly step wise, b) turning on and off defined selected consumers of the at least one consumer, and/or c) down-regulating defined selected consumers of the at least one consumer.

Regarding the energy reduction management, it is possible that the decision for/against energy reduction steps, such as shutting down the radio transceiver unit, is taken externally, e.g. by the network manager, while the action resulting from those decisions are executed by the EMS in response to respective energy reduction commands, received from the network manager. Alternatively, in order to keep the overall complexity low, all decisions relevant to the energy consumers and sources are preferably taken within the EMS. Further, there might be the possibility to shut down the radio receiver unit step wise, e.g. putting only specific frequency bands into sleep mode. It is also possible, according to a further embodiment of the proposed EMS, regarding the energy reduction management, to not only look at turning on and off a respective consumer, e.g. the radio transceiver unit but also controlling other consumers when it comes to energy reduction, i.e. when an energy reduction is envisaged. A command like "turn down air conditioning temperature by Y degrees Celsius" is possible here.

A second aspect of the invention is an energy autonomous cell site in a cellular network which comprises at least one energy supply unit, at least one energy storage unit, and as at least one consumer at least one radio transceiver unit and which comprises or is at least operably coupled to a computing device implementing a decision logic module of an on-site energy management system according to the present invention and as described herein, and to an interface module of the respective on-site energy management system.

According to a preferred embodiment of the cell site, the EMS is integrated in the cell site, i.e. the EMS is a component and an integral part of the cell site. That means that the at least one computing unit implementing the EMS, i.e. the decision logic module and the interface module, is a component of the cell site.

In a preferred embodiment of the energy autonomous cell site the energy supply unit is and/or comprises at least one renewable energy source such as a fuel cell, a solar cell, a wind turbine and/or a combination thereof.

According to still a further embodiment of the energy autonomous cell site, the EMS is in operative connection with a network manager of the cellular network and configured to query site-specific data and external data from the network manager if required and/or before the cell site is commissioned and configured accordingly, wherein the site-specific data comprise total energy storage capacity of the cell site, a maximal power consumption of the cell site, a time frame of an emergency service to refill the energy storage manually, a warning threshold defining a time when a warning for a potential emergency notification is triggered.

A third aspect of the invention is a method for controlling an energy autonomous cell site in a cellular network, wherein the cell site comprises at least one energy supply unit, at least one energy storage unit, and as at least one consumer at least one radio transceiver unit, the method comprising providing an on-site energy management system according to the present invention and as described herein, integrating in or at least operably coupling to the energy autonomous cell site at least one computing unit implementing the decision logic module of the on-site energy management system, and the interface module of the on-site energy management system, executing the decision logic module and initiating, via the interface module, altering an operation condition at/of the cell site and/or providing a status information about the cell site in response to control data provided by the decision logic module wherein controlling the energy storage comprises constantly monitoring, by the EMS, and analysing, by an energy storage management logic as a component of the decision logic module of the EMS, the current storage capacity on the cell site, calculating, by the energy storage management logic, a worst-case discharge time, t_crit, where the energy storage unit is estimated to be completely discharged, retrieving a service time from site specific settings, the service time being the time that is needed to refill the energy storage unit by an emergency service, comparing the worst-case discharge time with the service time and if the worst-case discharge time is smaller or equal to the service time, sending, by the energy storage management logic, an emergency notification and requesting, by the energy storage management logic, the emergency service to refill the energy storage unit.

According to preferred embodiments, executing the decision logic module and initiating altering an operation condition at/of the cell site and/or providing a status information about the cell site in response to the provided control data comprise at least one of the following steps:
The decision logic module is executed (repeatedly) at a given time interval, particularly in the range of 15 to 30 minutes, wherein each iteration (repetition) initiates at the cell site in parallel controlling energy distribution, energy storage and energy reduction, by acquiring, using the data acquisition means of the decision logic module, at least data about current energy generation and consumption at the cell site, current energy storage capacity at the cell site and current energy reduction commands for the cell site and providing, using the data processing means of the decision logic module, respective energy distribution control data, energy storage control data and energy reduction control data.

The step of controlling energy distribution comprises handling a power connection between the at least one energy supply unit and the at least one consumer on the cell site, and requesting with each iteration for a current amount of energy generation as input and for a current amount of required energy as output and deciding in terms of the respective energy distribution control data on a current energy distribution to be made on the basis of a comparison of the input and output.

The step of deciding on a current energy distribution on the site comprises: a) in the case that the input is equivalent or larger than the output, allowing an energy supply from the energy supply unit of the cell site to the at least one consumer of the cell site, b) in the case of an energy excess, initiating a transfer of the additional energy into the energy storage unit of the cell site, and c) in the case the input is insufficient to cover the required energy, initiating establishing a connection from the at least one consumer to the energy storage unit of the cell site, particularly only after executing a control logic (as a component of the decision logic module).

The step of energy distribution handles the power connection between the renewable energy generators, i.e. the at least one energy supply unit, and the at least one consumer, preferably multiple consumers on site. Every iteration starts with a request for the current amount of energy generated (input) and required (output), which are compared in the EMS. In the ideal case a), the input is equivalent or larger than the output. The EMS allows the power supply, i.e. the energy supply from the renewable energy sources to the consumers. In case of an energy excess in case b), the additional energy is fed into the cell site's energy storage unit. In the event the generated energy is insufficient to cover the consumers, corresponding to case c), a connection to the energy storage unit is established through the EMS. Before using the energy storage unit as a supplementary energy source, according to a preferred embodiment, a control logic is triggered.

The step of controlling energy storage comprises constantly monitoring and analysing the current storage capacity on the cell site and calculating a worst-case discharge time as well as a predicted discharge time taking into account external data, generating notifications about potential outages and requesting, if necessary, an emergency service to refill the energy storage manually.

Preferably, for identifying the time of potentially required emergency service, an energy storage management logic as further component of the decision logic module is executed wherein a time point t_crit where the energy storage unit is estimated to be completely discharged is calculated and a notification requesting the emergency service is sent in due time before the time point t_crit.

According to still a further embodiment of the proposed method, the energy storage management logic further calculates a predicted capacity, precap@t_crit, of the energy storage unit at time point t_crit, using external data, such as predicted energy reduction and weather forecasts, and, derived therefrom, an expected energy consumption until the time point t_crit, and, when the predicted capacity reaches a site-specific threshold, triggers, particularly constantly, over the next iterations a warning until the notification requesting the emergency service is sent.

The step of controlling energy reduction comprises allowing a communication of an energy reduction module to the at least one consumer at the cell site, and as soon as an external energy reduction command informs about possible energy reduction phases, initiating a transfer of the energy reduction command to the at least one consumer.

The step of controlling energy reduction comprises deciding for/against energy reduction steps, wherein the energy reduction steps comprise initiating in terms of respective control data a) shutting down the at least one consumer, particularly step wise, b) turning on and off defined selected consumers of the at least one consumer, and/or c) down-regulating defined selected consumers of the at least one consumer.

A fourth aspect of the invention is a cellular network comprising at least one energy autonomous cell site according to the invention and as described herein.

One more aspect of the present invention addresses an increased connectivity between multiple cell sites and their respective energy management systems. In a preferred embodiment it is provided that in the case that the energy storage levels run low at one cell site said cell site can temporarily pass control to neighboring cell sites in order to avoid complete power outage.

A fifth aspect is a computer program product, comprising a computer readable storage medium storing a program code, the program code being implementable on and executable by at least one processor which is integrated in or at least operably coupled to an energy autonomous cell site of a cellular network causing to carry out a method according to the invention when being executed by the at least one processor.

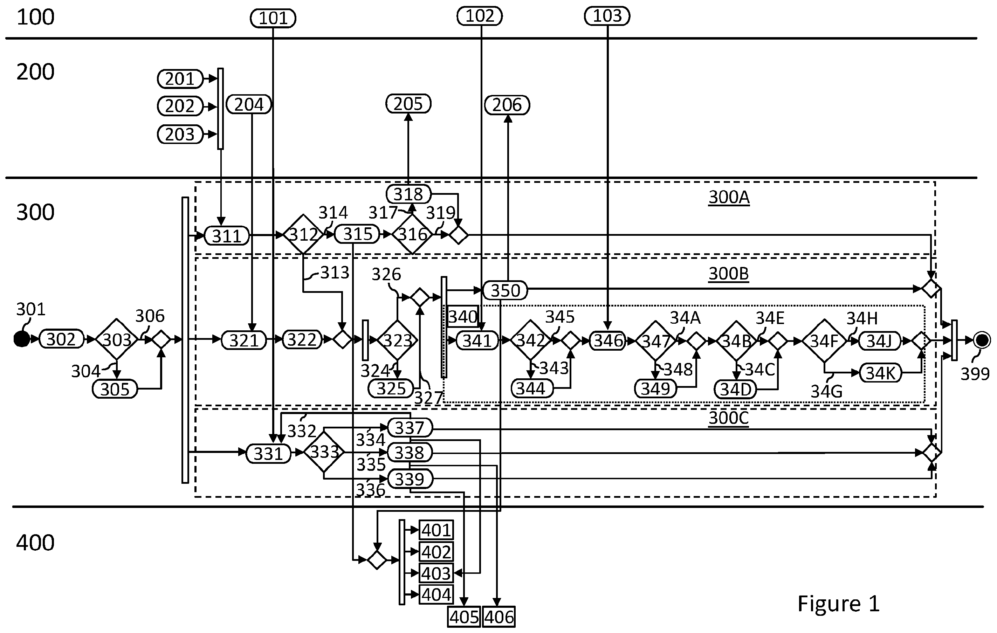

The present invention includes a holistic energy management system, which is completely independent of the specific energy sources and focuses on the interplay between internal and external information. Here, the state of an energy storage unit of a cell site is considered to be functioning and is not analyzed in more detail. An interesting aspect of the present invention is how long a cell site can sustain itself with its available power sources and how the individual components interact with each other. A potential energy storage unit endurance at a certain frequency including external data such as weather data or upcoming events can be predicted. This information is mirrored in a global set of variables used for predictive maintenance of the cell site's energy supply. One main aspect of the present invention is the consideration of external data and energy reduction possibilities. The energy management system with its decision logic module is depicted in an UML diagram as shown in figure 1. It is an essential advantage of the EMS according to the present invention that it ensures a holistic, predictive and continuous energy supply of the cell site.

The above described embodiments of the invention may be implemented using hardware and/or software. The various embodiments of the invention are implemented or executed using computing units, i.e. processors. Such a computing unit may be a general purpose computer, an application specific integrated circuit (ASIC), a digital signal processor (DSP), a field programmable gate array (FPGA) or another programmable logic device or a combination thereof. The various embodiments of the invention may also be implemented by means of software modules, which are executed by at least one computing unit. The various embodiments of the invention may also be realized by a combination of software modules and a hardware implementation. The software modules may be stored on any kind of computer readable storage medias, for example, flash memory, EPROM, EEPROM, RAM, hard disks, CD-ROM, DVD, etc.

Each of the communicative connections between the different components may be a direct connection or an indirect connection, respectively. Each communicative connection may be a wired or a wireless connection. Each suitable communication technology may be used. The at least one computing unit may include one or more communications interfaces for communicating with other components. Such communication may be executed using a wired data transmission protocol, such as fiber distributed data interface (FDDI), digital subscriber line (DSL), Ethernet, asynchronous transfer mode (ATM), or any other wired transmission protocol. Alternatively, the communication may be wirelessly via wireless communication networks using any of a variety of protocols, such as General Packet Radio Service (GPRS), Universal Mobile Telecommunications System (UMTS), Code Division Multiple Access (CDMA), Long Term Evolution (LTE), wireless Universal Serial Bus (USB), and/or any other wireless protocol. The respective communication may be a combination of a wireless and a wired communication.

Computer-readable media (transitory or non-transitory, as appropriate) suitable for storing computer program instructions (i.e. program codes) and data include all forms of non-volatile memory, media and memory devices, including by way of example semiconductor memory devices, e.g. erasable programmable read-only memory (EPROM), electrically-erasable programmable read-only memory (EEPROM), and flash memory devices; magnetic disks, e.g., internal hard disks or removable disks; magneto-optical disks; and CD-ROM, DVD+/-R. DVD-RAM, and DVD-ROM disks.

A program software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. The computer-executable instructions (i.e. program codes) may be written in HTML, TS (TypeScript), and CSS (Cascading Style Sheets).

A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computing unit (processor, computing unit) or on multiple computing units (processors, computers) that are located at one site or distributed across multiple sites and interconnected by a communication network. Portions of the programs may be designed as individual modules that implement the various features and functionality through various objects, methods, or other processes. Alternatively, the programs may instead include a number of sub-modules, third-party services, components, libraries, and such, as appropriate. Conversely, the features and functionality of various components can be combined into single components as appropriate.

The following description is presented to enable any person skilled in the art to make, use and/or practice the disclosed subject matter, and is provided in the context of one or more particular implementations. Various modifications to the disclosed implementations will be readily apparent to those skilled in the art, and the general principles defined herein may be applied to other implementations and applications without departing from the scope of the disclosure. Thus, the present disclosure is not intended to be limited to the described and/or illustrated implementations, but is to be accorded the widest scope consistent with the principles and features disclosed herein.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

### Brief description of the drawings

- Fig. 1: schematically shows a UML diagram of an embodiment of a cell site with an energy management system according to the present invention.

### Detailed description of the drawings

Figure 1 schematically shows a static structure diagram that describes a structure of an embodiment of a cell site with an energy management system according to the present invention by showing the cell site's components, operations, and the relationships among the components.

The cell site comprises at least one energy supply unit, such as a fuel cell, a photovoltaic source, a water turbine and/or a wind energy source, and at least one energy storage unit, both being shown here as energy sources 200. Further, there are external factors 100 which can have any influence on the energy management of the radio base site and which are, therefore, to be considered by the energy management system, EMS, 300 of the cell site. Further, the cell site comprises at least one consumer 400 such as at least one radio transceiver unit.

The EMS 300 comprises a decision logic, i.e. a decision logic module, which is executed at a given time interval, particularly in the range of 15 - 30 min. Each iteration initiates the parallel execution of three tasks: the energy distribution 300A, the energy storage management 300B and the energy reduction management 300C.

The energy distribution 300A handles a power connection between the at least one energy supply unit, e.g. renewable energy generators, and the at least one consumer 400, preferably multiple consumers 400 on site. When starting 301 the iterative process of the decision logic, a current status 302 of the cell site is requested by the EMS 300 from a network manager of the cellular network. Based on the current status 302 of the cell site, it is checked whether the cell site has just been rebooted 303. If it is the first cycle after reboot 304 guideline policies and site specific settings 305 are retrieved from the network provider. Otherwise 306, the guidelines and the site specific settings have already been retrieved. Every iteration starts with a request for a current amount of energy generated (input) 311 and for a current amount of energy required (output), which are compared 312 in the EMS. In the ideal case a), the input is equivalent or larger than the output, as indicated by 314. The EMS allows 315 the power supply, i.e. the energy supply from the renewable energy sources to the consumers 400. Thus, different consumers 400 can be turned on, such as an air condition 401, a power supply unit 402, the radio transceiver unit 403 and other components 404. It is checked 316 whether an energy excess is available. In case of an energy excess 317 in case b), the additional energy is fed 318 into the site's energy storage unit. The site's energy storage is then charged 205. In case of no energy excess 319, the energy distribution in this respective iteration stops until a next iteration starts. In the event the generated energy is insufficient 313 to cover the consumers 400, corresponding to case c), a connection 206 to the energy storage unit may be established through the EMS 300. Before using the energy storage unit as a supplementary energy source, according to a preferred embodiment, a control logic is triggered.

Controlling energy storage comprises constantly monitoring and analysing the current storage capacity 321 (retrieved 204 from the energy storage unit) on the site and calculating 322 a worst-case discharge time t_crit. For identifying the time of potentially required emergency service, the time point t_crit where the energy storage unit is estimated to be completely discharged is calculated 322. Further, a service time t_service is retrieved from the site specific settings. The service time t_service is the time frame that is needed to refill the energy storage unit by an emergency service, this time frame is site-specific. The worst-case discharge time t_crit is compared 323 with the service time t_service. If the time t_crit is greater than the service time t_service 326 there is no need yet for sending a notification requesting the emergency service. Rather, the energy storage unit can be used 350 for supplying energy to the consumers 400, such as an air condition 401, a power supply unit 402, a radio transceiver unit 403, and other consumers 404, when the energy supply from the other energy sources is not sufficient. Otherwise, if time t_crit is smaller or equal to the service time t_service 324 an emergency notification is sent 325 in due time before the time point t_crit to the service provider to initiate the emergency recharge of the energy storage unit. After the emergency notification is sent 327, the consumers 400 are supplied 350 with the remaining storage supply of the energy storage unit. The emergency notification will be triggered with each following iteration until the energy storage unit is recharged.

According to still a further embodiment of the proposed on-site energy management system 300, the energy storage management logic further calculates 340 a predicted capacity, precap@t_crit, of the energy storage unit at time point t_crit, using external data 102, such as predicted energy reduction 341 and weather forecasts, and, derived therefrom, an expected energy consumption until the time point t_crit. In the case 343 that an energy reduction 342 is expected, the predicted capacity is increased 344 by a factor x_reduction. Otherwise 345, there is no effect on the predicted capacity due to an expected energy reduction. Further, external data, such as weather data, are provided 103 and gathered 346. Based on these external data, it is analysed 347 whether solar energy is expected. In the case 348 that solar energy is expected, the predicted capacity is (additionally) increased 349 by a factor x_solar. Otherwise 34A, there is no effect on the predicted capacity due to solar energy. Further, it is analysed 34B whether wind energy is expected. In the case 34C that wind energy is expected, the predicted capacity is (additionally) increased 34D by a factor x_wind. Otherwise 34E, there is no effect on the predicted capacity due to wind energy. As energy production and reduction is considered, the discharge rate decreases and the expected energy storage capacity predcap@t_crit will be larger than 0%. It is checked 34F whether the predicted capacity is smaller as a site specific threshold. When the predicted capacity reaches the site-specific threshold 34G, the energy storage management logic triggers, particularly constantly, over the next iterations a warning "service expected soon" 34K until the notification requesting the emergency service is sent. As long as 34H the predicted capacity is smaller than the threshold, a notification "energy storage status is good" can be sent 34J with each iteration. Each iteration stops 399 and a new iteration starts 301.

Concerning an energy reduction, it is possible that due to external factors 100 there exists a current energy reduction option 101, e.g. overnight it might be possible to turn off some of the consumers or to change their respective operating mode from "active" to "sleep mode". The controlling of energy reduction comprises receiving 331 one or more energy reduction results resulting from existing current energy reduction options and checking 333 whether energy reduction is currently possible. If an energy reduction is not possible 334, a respective command to turn on the at least one consumer, e.g. the radio transceiver unit, is generated 337, where a loop is triggered 332. If energy reduction is possible in limited ranges 335, a respective reduction command to turn the radio transceiver into "standby"-mode is generated. If an energy reduction is possible in a larger range 336, a respective reduction command to turn the radio transceiver into "deep sleep mode" is generated 339. Further, a communication of an energy reduction module to the at least one consumer at the site is allowed, and as soon as an external energy reduction command informs about possible energy reduction phases, initiating a transfer of the energy reduction command to the at least one consumer 403, 405, 406. It is possible, for example, that depending on the result after checking whether energy reduction is currently possible, that the radio transceiver unit is turned on 403 in response to the command 337 to turn the radio transceiver unit on, that the radio transceiver unit (RRU - remote radio unit) is turned in "standby" 406 in response to the command 338 to turn the radio transceiver unit into "standby", or that the radio transceiver unit (RRU - remote radio unit) is turned in "sleep mode" 405 in response to the command 339 to turn the radio transceiver unit into "deep sleep mode".

Preferably, controlling energy reduction comprises deciding for/against energy reduction steps, wherein the energy reduction steps comprise initiating in terms of respective control data a) shutting down the at least one consumer, particularly step wise, b) turning on and off defined selected consumers of the at least one consumer, and/or c) down-regulating defined selected consumers of the at least one consumer. Thus, for example, the air condition is on 401, the power supply unit is on 402, the other units 404 are on, but the radio transceiver unit is on 403, in standby 406 or in deep sleep mode 405, depending on the energy reduction commands.

In the present case, a distinction is made between different consumers and their operation at the current time of a respective iteration.

Regarding the energy reduction management, it is possible that the decision for/against energy reduction steps, such as shutting down the radio transceiver unit, is taken externally, e.g. by the network manager, while the action resulting from those decisions are executed by the EMS. Alternatively, in order to keep the overall complexity low, all decisions relevant to the energy consumers and sources are preferably taken within the EMS. Further, there might be the possibility to shut down the radio receiver unit step wise, e.g. putting only specific frequency bands into sleep mode. It is also possible, according to a further embodiment of the proposed EMS, regarding the energy reduction management, to not only look at turning on and off a respective consumer, e.g. the radio transceiver unit but also controlling other consumers when it comes to energy reduction. A command like "turn down air conditioning temperature by Y degrees Celsius" is possible here.

### Reference Numerals

- 100: external factors
- 101: provide current energy reduction option
- 102: provide expected energy reduction prediction
- 103: provide wind and solar predictions

- 200: energy sources
- 201: measure generated power of source 1
- 202: measure generated power of source 2
- 203: measure generated power of other sources
- 204: measure energy storage capacity
- 205: energy storage is charged
- 206: energy storage is used

- 300: energy management system
- 300A: energy distribution management
- 300B: energy storage management
- 300C: energy reduction management

- 301: start of iteration
- 302: get current device status
- 303: 1st cycle after reboot?
- 304: 1st cycle after reboot
- 305: get guideline policies and site specific settings
- 306: no 1st cycle after reboot

- 311: get generated power amount
- 312: input >= output?
- 313: no, input is not >= output
- 314: yes, input is >= output
- 315: supply energy to consumers
- 316: excess energy available?
- 317: yes, excess energy is available
- 318: feed excess into storage
- 319: no, excess energy is not available

- 321: get current storage capacity
- 322: calculate critical discharge time t_crit
- 323: t_crit <= t_service?
- 324: yes, t_crit <= t service
- 325: send emergency notification: "Service required"
- 326: no, t_crit is not <= t_service
- 327: emergency notification is sent

- 331: receive current energy reduction result
- 332: trigger loop
- 333: energy reduction possible?
- 334: no, energy reduction is not possible
- 335: yes, energy reduction is possible (StandBy)
- 336: yes, energy reduction is possible (Deep Sleep)
- 337: turn radio unit on
- 338: turn radio unit into "StandBy"
- 339: turn radio unit into "Deep Sleep Mode"

- 340: estimated storage capacity
- 341: get predicted energy reduction data
- 342: energy reduction expected?
- 343: yes, energy reduction is expected
- 344: increase predicted storage capacity with factor x_reduction
- 345: no, energy reduction is not expected
- 346: get external data
- 347: solar energy expected?
- 348: yes, solar energy is expected
- 349: increase predicted storage capacity with factor x_solar
- 34A: no, solar energy is not expected
- 34B: wind energy expected?
- 34C: yes, wind energy is expected
- 34D: increase predicted storage capacity with factor x_wind
- 34E: no, wind energy is not expected
- 34F: predicted storage capacity < capacity_threshold
- 34G: yes, predicted storage capacity is < capacity_threshold
- 34H: no, predicted storage capacity is not < capacity_threshold
- 34J: send notification: "Battery status is good"
- 34K: send warning: "Service expected soon"
- 350: use energy storage

- 399: stop of iteration

- 400: consumers
- 401: air condition ON
- 402: power supply unit ON
- 403: base station ON
- 404: other consumers ON
- 405: RRU in "Deep Sleep Mode"
- 406: RRU in "StandBy"

## Claims

1. An on-site energy management system, EMS, for an energy autonomous cell site in a cellular network wherein the cell site comprises at least one energy supply unit, at least one energy storage unit, and as at least one consumer at least one radio transceiver unit, wherein the EMS (300) comprises at least:
- a decision logic module with data acquisition means and data processing means
wherein the decision logic module is implemented on a computing device that can be integrated in the cell site or is at least operably coupled to the cell site,
wherein the decision logic module is configured to be iteratively executed at a given time interval wherein in each iteration the decision logic module is configured to initiate and initiates at the cell site in parallel controlling energy distribution (300A), energy storage (300B) and energy reduction (300C), by acquiring, using the data acquisition means, at least data about current energy generation and consumption at the cell site, current energy storage capacity at the cell site and current energy reduction commands for the cell site and providing, using the data processing means, respective energy distribution control data, energy storage control data and energy reduction control data,
- an interface module that is implemented on the computing device that can be integrated in or is at least operably coupled to the cell site wherein the interface module is configured to detect the respective control data and to initiate, depending on the control data, altering an operating condition of/at the cell site and/or providing a status information about the cell site in response to the control data,
wherein controlling the energy storage (300B) comprises constantly monitoring, by the EMS, and analysing, by an energy storage management logic as a component of the decision logic module of the EMS, the current storage capacity (321) on the cell site, calculating, by the energy storage management logic, a worst-case discharge time, t_crit, (322) where the energy storage unit is estimated to be completely discharged, retrieving a service time from site specific settings (305), the service time being the time that is needed to refill the energy storage unit by an emergency service (325), comparing (323) the worst-case discharge time (322) with the service time and if the worst-case discharge time is smaller or equal to the service time, sending (325), by the energy storage management logic, an emergency notification and requesting, by the energy storage management logic, the emergency service (325) to refill the energy storage unit.

2. The on-site energy management system according to claim 1, wherein controlling energy distribution (300A) comprises handling a power connection between the at least one energy supply unit and the at least one consumer on the cell site, and acquiring with each iteration data about a current amount of energy generation (311) as input and about a current amount of required energy as output and deciding in terms of the respective energy distribution control data on a current energy distribution to be made on the basis of a comparison (312) of the input and output.

3. The on-site energy management system according to claim 2, wherein deciding on a current energy distribution on the cell site comprises: a) in the case that the input is equivalent or larger than the output (314), allowing an energy supply from the energy supply unit to the at least one consumer, b) in the case of an energy excess (317), initiating a transfer of the additional energy into the energy storage unit of the cell site (318), and c) in the case the input is insufficient to cover the required energy (313), initiating establishing a connection to the energy storage unit of the cell site, particularly only after executing a control logic.

4. The on-site energy management system according to any one of claims 1 to 3, wherein for identifying the time of potentially required emergency service, an energy storage management logic is executed wherein the worst-case discharge time is calculated (322) and a notification requesting the emergency service is sent (325) in due time before the worst-case discharge time.

5. The on-site energy management system according to claim 4, wherein the energy storage management logic (300B) further calculates a predicted capacity, precap@t_crit, of the energy storage unit at time point t_crit, using external data, such as predicted energy reduction and weather forecasts, and, derived therefrom, an expected energy consumption until the time point t_crit, and, when the predicted capacity reaches a site-specific threshold, triggers, particularly constantly, over the next iterations a warning until the notification requesting the emergency service is sent.

6. The on-site energy management system according to claim 5, wherein variances of previous predictions of an energy storage capacity at a respective time point X from a respective true energy storage capacity at the respective time point X are taken into consideration when calculating the predicted capacity of the energy storage unit at time point t_crit, with X being before t_crit in time.

7. The on-site energy management system according to one of claims 1 to 6, wherein controlling energy reduction (300C) comprises allowing a communication of an energy reduction module to the at least one consumer at the cell site, and as soon as an external energy reduction command informs about possible energy reduction phases, initiating a transfer of the energy reduction command to the at least one consumer at the cell site.

8. The on-site energy management system according to claim 7, wherein controlling energy reduction (300C) comprises deciding for/against energy reduction steps, wherein the energy reduction steps comprise initiating in terms of respective control data a) shutting down the at least one consumer, particularly step wise, b) turning on and off defined selected consumers of the at least one consumer, and/or c) down-regulating defined selected consumers of the at least one consumer.

9. An energy autonomous cell site in a cellular network which comprises at least one energy supply unit, at least one energy storage unit, as at least one consumer at least one radio transceiver unit and at least one computing device implementing an on-site energy management system (300) according to any one of the preceding claims.

10. The energy autonomous cell site according to claim 9 wherein the at least one energy supply unit comprises at least one renewable energy source such as a fuel cell, a solar cell, a wind turbine and/or a combination thereof.

11. The energy autonomous cell site according to one of claims 9 or 10 wherein the EMS is in operative connection with a network manager of the cellular network and configured to query site-specific data and external data from the network manager if required and/or before the cell site is commissioned and configured accordingly, wherein the site-specific data comprise at least one of total energy storage capacity of the cell site, maximum power consumption of the cell site, a time frame of an emergency service to refill the energy storage unit manually, a warning threshold defining a time when a warning for a potential emergency notification is triggered.

12. A method for controlling an energy autonomous cell site in a cellular network, wherein the energy autonomous cell site comprises at least one energy supply unit, at least one energy storage unit and as at least one consumer at least one radio transceiver unit, the method comprising providing an on-site energy management system (300) according to any one of claims 1 to 8, integrating in or at least operably coupling to the energy autonomous cell site a computing unit implementing the decision logic module of the on-site energy management system (300), and the interface module of the on-site energy management system (300), and executing the decision logic module and initiating, via the interface module, depending on control data provided by the decision logic module, altering an operation condition at/of the cell site and/or providing a status information about the cell site in response to the control data provided by the decision logic module wherein controlling the energy storage (300B) comprises constantly monitoring, by the EMS, and analysing, by an energy storage management logic as a component of the decision logic module of the EMS, the current storage capacity (321) on the cell site, calculating, by the energy storage management logic, a worst-case discharge time, t_crit, (322) where the energy storage unit is estimated to be completely discharged, retrieving a service time from site specific settings (305), the service time being the time that is needed to refill the energy storage unit by an emergency service (325), comparing (323) the worst-case discharge time (322) with the service time and if the worst-case discharge time is smaller or equal to the service time, sending, by the energy storage management logic, an emergency notification and requesting, by the energy storage management logic, the emergency service (325) to refill the energy storage unit.

13. A cellular network comprising at least one energy autonomous cell site according to one of claims 9 to 11.

14. A computer program product, comprising a computer readable storage medium storing a program code, the program code being implementable on and executable by at least one processor which is integrated in or at least operably coupled to an energy autonomous cell site of a cellular network causing to carry out a method according to claim 12 when being executed by the at least one processor.

## Patentansprüche

1. System zur Vor-Ort-Energieverwaltung (Energy Management System, EMS) für einen energieautonomen Mobilfunkstandort in einem zellularen Netzwerk, wobei der Mobilfunkstandort mindestens eine Energieversorgungseinheit, mindestens eine Energiespeichereinheit und als mindestens einen Verbraucher mindestens eine Funkgeräteeinheit umfasst, wobei das EMS (300) mindestens Folgendes umfasst:
- ein Entscheidungslogikmodul mit Datenerfassungsmitteln und Datenverarbeitungsmitteln wobei das Entscheidungslogikmodul auf einer Rechenvorrichtung implementiert ist, die in den Mobilfunkstandort integriert werden kann oder zumindest betriebsfähig mit dem Mobilfunkstandort gekoppelt ist,
wobei das Entscheidungslogikmodul dazu konfiguriert ist, iterativ in einem gegebenen Zeitintervall ausgeführt zu werden, wobei in jeder Iteration das Entscheidungslogikmodul dazu konfiguriert ist, am Mobilfunkstandort parallel das Steuern der Energieverteilung (300A), der Energiespeicherung (300B) und der Energiereduzierung (300C) einzuleiten und dieses einleitet, indem unter Verwendung der Datenerfassungsmittel zumindest Daten über die aktuelle Energieerzeugung und den aktuellen Energieverbrauch am Mobilfunkstandort, die aktuelle Energiespeicherkapazität am Mobilfunkstandort und die aktuellen Energiereduzierungsbefehle für den Mobilfunkstandort erfasst werden und unter Verwendung der Datenverarbeitungsmittel entsprechende Energieverteilungssteuerdaten, Energiespeicherungssteuerdaten und Energiereduzierungssteuerdaten bereitgestellt werden,
- ein Schnittstellenmodul, das auf der Rechenvorrichtung implementiert ist, die in den Mobilfunkstandort integriert werden kann oder zumindest betriebsfähig mit dem Mobilfunkstandort gekoppelt ist, wobei das Schnittstellenmodul dazu konfiguriert ist, die jeweiligen Steuerdaten zu erfassen und in Abhängigkeit von den Steuerdaten das Ändern eines Betriebszustands von/an dem Mobilfunkstandort und/oder das Bereitstellen einer Statusinformation über den Mobilfunkstandort in Reaktion auf die Steuerdaten einzuleiten,
wobei das Steuern des Energiespeichers (300B) das ständige Überwachen der aktuellen Speicherkapazität (321) am Mobilfunkstandort durch das EMS und das Analysieren dieser Kapazität durch eine Energiespeicherverwaltungslogik als Komponente des Entscheidungslogikmoduls des EMS, das Berechnen einer Worst-Case-Entladezeit t_crit (322) durch die Energiespeicherverwaltungslogik, bei der davon ausgegangen wird, dass die Energiespeichereinheit vollständig entladen ist, das Abrufen einer Wartungszeit aus den standortspezifischen Einstellungen (305), wobei die Wartungszeit die Zeit ist, die benötigt wird, um die Energiespeichereinheit durch einen Notdienst (325) wieder aufzufüllen, das Vergleichen (323) der Worst-Case-Entladezeit (322) mit der Wartungszeit und, wenn die Worst-Case-Entladezeit kleiner oder gleich der Wartungszeit ist, das Senden (325) einer Notbenachrichtigung durch die Energiespeicherverwaltungslogik und Anfordern des Notdienstes (325) zum Wiederauffüllen der Energiespeichereinheit durch die Energiespeicherverwaltungslogik umfasst.

2. System zur Vor-Ort-Energieverwaltung nach Anspruch 1, wobei das Steuern der Energieverteilung (300A) das Handhaben einer Stromverbindung zwischen der mindestens einen Energieversorgungseinheit und dem mindestens einen Verbraucher am Mobilfunkstandort, und das Erfassen von Daten über eine aktuelle Menge an Energieerzeugung (311) als Eingabe und über eine aktuelle Menge an benötigter Energie als Ausgabe bei jeder Iteration sowie das Entscheiden in Bezug auf die jeweiligen Energieverteilungssteuerdaten über eine aktuell vorzunehmende Energieverteilung auf der Grundlage eines Vergleichs (312) der Eingabe und Ausgabe umfasst.

3. System zur Vor-Ort-Energieverwaltung nach Anspruch 2, wobei das Entscheiden über eine aktuelle Energieverteilung am Mobilfunkstandort Folgendes umfasst: a) für den Fall, dass die Eingabe gleich oder größer als die Ausgabe (314) ist, Zulassen einer Energieversorgung von der Energieversorgungseinheit zu dem mindestens einen Verbraucher, b) für den Fall eines Energieüberschusses (317), Veranlassen einer Übertragung der zusätzlichen Energie in die Energiespeichereinheit des Mobilfunkstandorts (318) und c) für den Fall, dass die Eingabe nicht ausreicht, um die benötigte Energie zu decken (313), Veranlassen eines Verbindungsaufbaus zu der Energiespeichereinheit des Mobilfunkstandorts, insbesondere erst nach Ausführung einer Steuerlogik.

4. System zur Vor-Ort-Energieverwaltung nach einem der Ansprüche 1 bis 3, wobei zur Ermittlung des Zeitpunktes eines möglicherweise erforderlichen Notdienstes eine Energiespeicherverwaltungslogik ausgeführt wird, bei der der Worst-Case-Entladezeitpunkt berechnet wird (322) und rechtzeitig vor dem Worst-Case-Entladezeitpunkt eine den Notdienst anfordernde Benachrichtigung gesendet wird (325).

5. System zur Vor-Ort-Energieverwaltung nach Anspruch 4, wobei die Energiespeicherverwaltungslogik (300B) ferner unter Verwendung externer Daten, wie z. B. prognostizierter Energiereduktion und Wettervorhersagen, eine Prädiktion der Kapazität, precap@t_crit, des Energiespeichers zum Zeitpunkt t_crit und daraus abgeleitet einen erwarteten Energieverbrauch bis zum Zeitpunkt t_crit berechnet und bei Erreichen einer standortspezifischen Schwelle durch die Prädiktion über die nächsten Iterationen eine Warnung, insbesondere konstant, auslöst, bis die den Notdienst anfordernde Benachrichtigung gesendet wird.

6. System zur Vor-Ort-Energieverwaltung nach Anspruch 5, wobei Abweichungen früherer Prädiktionen einer Energiespeicherkapazität zu einem jeweiligen Zeitpunkt X von einer jeweiligen wahren Energiespeicherkapazität zum jeweiligen Zeitpunkt X bei der Berechnung der prognostizierten Kapazität der Energiespeichereinheit zum Zeitpunkt t_crit berücksichtigt werden, wobei X zeitlich vor t_crit liegt.

7. System zur Vor-Ort-Energieverwaltung nach einem der Ansprüche 1 bis 6, wobei das Steuern der Energiereduzierung (300C) das Zulassen einer Kommunikation eines Energiereduzierungsmoduls mit dem mindestens einen Verbraucher am Mobilfunkstandort, und, sobald ein externer Energiereduzierungsbefehl über mögliche Energiereduzierungsphasen informiert, das Einleiten einer Übertragung des Energiereduzierungsbefehls an den mindestens einen Verbraucher am Mobilfunkstandort umfasst.

8. System zur Vor-Ort-Energieverwaltung nach Anspruch 7, wobei das Steuern der Energiereduzierung (300C) das Entscheiden für/gegen Energiereduzierungsschritte umfasst, wobei die Energiereduzierungsschritte das Einleiten, im Rahmen von entsprechenden Steuerdaten, von a) Abschalten des mindestens einen Verbrauchers, insbesondere schrittweise, b) Ein- und Ausschalten definierter ausgewählter Verbraucher des mindestens einen Verbrauchers und/oder c) Herunterregeln definierter ausgewählter Verbraucher des mindestens einen Verbrauchers umfassen.

9. Energieautonomer Mobilfunkstandort in einem zellularen Netzwerk, der mindestens eine Energieversorgungseinheit, mindestens eine Energiespeichereinheit, als mindestens einen Verbraucher mindestens eine Funkgeräteeinheit und mindestens eine Rechenvorrichtung umfasst, die ein System zur Vor-Ort-Energieverwaltung (300) nach einem der vorangehenden Ansprüche implementiert.

10. Energieautonomer Mobilfunkstandort nach Anspruch 9, wobei die mindestens eine Energieversorgungseinheit mindestens eine erneuerbare Energiequelle wie eine Brennstoffzelle, eine Solarzelle, eine Windturbine und/oder eine Kombination davon umfasst.

11. Energieautonomer Mobilfunkstandort nach einem der Ansprüche 9 oder 10, wobei das EMS in operativer Verbindung mit einem Netzwerkverwalter des Mobilfunknetzwerks steht und dazu konfiguriert ist, bei Bedarf und/oder vor Inbetriebnahme des Mobilfunkstandorts und der entsprechenden Konfiguration desselben, standortspezifische Daten und externe Daten vom Netzwerkverwalter abzufragen, wobei die standortspezifischen Daten mindestens eines der Folgenden umfassen: Gesamtenergiespeicherkapazität des Mobilfunkstandorts, maximaler Stromverbrauch des Mobilfunkstandorts, Zeitrahmen eines Notdienstes zum manuellen Nachfüllen der Energiespeichereinheit, Warnschwelle, die einen Zeitpunkt definiert, zu dem eine Warnung für eine potenzielle Notmeldung ausgelöst wird.

12. Verfahren zum Steuern eines energieautonomen Mobilfunkstandorts in einem zellularen Netzwerk, wobei der energieautonome Mobilfunkstandort mindestens eine Energieversorgungseinheit, mindestens eine Energiespeichereinheit und als mindestens einen Verbraucher mindestens eine Funkgeräteeinheit umfasst, wobei das Verfahren Folgendes umfasst: Bereitstellen eines Systems zur Vor-Ort-Energieverwaltung (300) nach einem der Ansprüche 1 bis 8, Integrieren einer Recheneinheit, die das Entscheidungslogikmodul des Systems zur Vor-Ort-Energieverwaltung (300) und das Schnittstellenmodul des Systems zur Vor-Ort-Energieverwaltung (300) implementiert, in den energieautonomen Mobilfunkstandort oder zumindest betriebsfähiges Koppeln mit diesem, und Ausführen des Entscheidungslogikmoduls und Einleiten, über das Schnittstellenmodul, in Abhängigkeit von Steuerdaten, die von dem Entscheidungslogikmodul bereitgestellt werden, des Änderns eines Betriebszustands am/des Mobilfunkstandorts und/oder des Bereitstellens einer Statusinformation über den Mobilfunkstandort in Reaktion auf die von dem Entscheidungslogikmodul bereitgestellten Steuerdaten, wobei das Steuern des Energiespeichers (300B) das ständige Überwachen der aktuellen Speicherkapazität (321) am Mobilfunkstandort durch das EMS und das Analysieren dieser Kapazität durch eine Energiespeicherverwaltungslogik als Komponente des Entscheidungslogikmoduls des EMS, das Berechnen einer Worst-Case-Entladezeit t_crit (322) durch die Energiespeicherverwaltungslogik, bei der davon ausgegangen wird, dass die Energiespeichereinheit vollständig entladen ist, das Abrufen einer Wartungszeit aus den standortspezifischen Einstellungen (305), wobei die Wartungszeit die Zeit ist, die benötigt wird, um die Energiespeichereinheit durch einen Notdienst (325) wieder aufzufüllen, das Vergleichen (323) der Worst-Case-Entladezeit (322) mit der Wartungszeit und, wenn die Worst-Case-Entladezeit kleiner oder gleich der Wartungszeit ist, das Senden einer Notbenachrichtigung durch die Energiespeicherverwaltungslogik und Anfordern des Notdienstes (325) zum Wiederauffüllen der Energiespeichereinheit durch die Energiespeicherverwaltungslogik umfasst.

13. Zellulares Netzwerk, das mindestens einen energieautonomen Mobilfunkstandort nach einem der Ansprüche 9 bis 11 umfasst.

14. Computerprogrammprodukt, das ein computerlesbares Speichermedium umfasst, das einen Programmcode speichert, wobei der Programmcode auf mindestens einem Prozessor, der in einen energieautonomen Mobilfunkstandort eines zellularen Netzwerks integriert oder zumindest betriebsfähig mit diesem gekoppelt ist, implementiert und von diesem ausgeführt werden kann und bewirkt, dass ein Verfahren nach Anspruch 12 ausgeführt wird, wenn er von dem mindestens einen Prozessor ausgeführt wird.

## Revendications

1. Système de gestion d'énergie sur site (EMS) pour un site cellulaire autonome en énergie dans un réseau cellulaire, le site cellulaire comprenant au moins une unité d'alimentation en énergie, au moins une unité de stockage d'énergie et, en tant qu'au moins un consommateur, au moins une unité émettrice-réceptrice radio, l'EMS (300) comprenant au moins :
- un module de logique décisionnelle doté de moyens d'acquisition et de traitement des données,
le module de logique décisionnelle étant mis en œuvre sur un dispositif informatique qui peut être intégré au site cellulaire ou est au moins couplé de manière opérationnelle au site cellulaire,
le module de logique décisionnelle étant configuré pour être exécuté de manière itérative à un intervalle de temps donné,
à chaque itération, le module de logique décisionnelle étant configuré pour déclencher, et déclenche sur le site cellulaire parallèlement le contrôle de la distribution d'énergie (300A), du stockage d'énergie (300B) et de la réduction d'énergie (300C), en acquérant, à l'aide des moyens d'acquisition de données, au moins des données sur la production et la consommation actuelles d'énergie sur le site cellulaire, la capacité actuelle de stockage d'énergie sur le site cellulaire et les commandes actuelles de réduction d'énergie pour le site cellulaire, et en fournissant, à l'aide des moyens de traitement de données, des données de contrôle de la distribution d'énergie, des données de contrôle du stockage d'énergie et des données de contrôle de la réduction d'énergie respectives,
- un module d'interface mis en œuvre sur le dispositif informatique qui peut être intégré ou est au moins couplé de manière opérationnelle au site cellulaire, le module d'interface étant configuré pour détecter les données de contrôle respectives et pour déclencher, en fonction des données de contrôle, la modification d'un état de fonctionnement du/au site cellulaire et/ou la fourniture d'informations sur l'état du site cellulaire en réponse aux données de contrôle,
le contrôle du stockage d'énergie (300B) comprenant la surveillance constante, par l'EMS, et l'analyse, par une logique de gestion du stockage d'énergie en tant que composant du module de logique décisionnelle de l'EMS, de la capacité actuelle de stockage (321) sur le site cellulaire, le calcul, par la logique de gestion du stockage d'énergie, d'un temps de décharge le plus défavorable, t_crit, (322) où l'on estime que l'unité de stockage d'énergie est complètement déchargée, la récupération d'un temps de service à partir de paramètres spécifiques du site (305), le temps de service étant le temps nécessaire pour recharger l'unité de stockage d'énergie par un service d'urgence (325), la comparaison (323) du temps de décharge le plus défavorable (322) avec le temps de service et, si le temps de décharge le plus défavorable est inférieur ou égal au temps de service, l'envoi (325), par la logique de gestion du stockage d'énergie, d'une notification d'urgence et la demande, par la logique de gestion du stockage d'énergie, au service d'urgence (325) de recharger l'unité de stockage d'énergie.

2. Système de gestion d'énergie sur site selon la revendication 1, le contrôle de la distribution d'énergie (300A) comprenant la gestion d'une connexion électrique entre la au moins une unité d'alimentation en énergie et l'au moins un consommateur sur le site cellulaire, et l'acquisition, à chaque itération, de données sur un volume actuel de production d'énergie (311) en tant qu'entrée et sur un volume actuel d'énergie requise en tant que sortie, et la décision, en fonction des données de contrôle de la distribution d'énergie respectives, quant à une distribution actuelle d'énergie à effectuer sur la base d'une comparaison (312) de l'entrée et de la sortie.

3. Système de gestion d'énergie sur site selon la revendication 2, la décision quant à une distribution actuelle d'énergie sur le site cellulaire comprenant : a) l'autorisation d'une alimentation en énergie de l'au moins un consommateur par l'unité d'alimentation en énergie, si l'entrée est équivalente ou supérieure à la sortie (314), b) le déclenchement d'un transfert de l'énergie supplémentaire vers l'unité de stockage d'énergie du site cellulaire (318) dans le cas d'un excès d'énergie (317) et c) le déclenchement de l'établissement d'une connexion à l'unité de stockage d'énergie du site cellulaire, en particulier seulement après l'exécution d'une logique de contrôle, si l'entrée est insuffisante pour couvrir l'énergie requise (313).

4. Système de gestion d'énergie sur site selon l'une des revendications 1 à 3, dans lequel, pour déterminer le temps du service d'urgence potentiellement requis, une logique de gestion du stockage d'énergie est exécutée, le temps de décharge le plus défavorable est calculée (322) et une notification demandant le service d'urgence est envoyée (325) en temps utile avant le temps de décharge la plus défavorable.

5. Système de gestion d'énergie sur site selon la revendication 4, dans lequel la logique de gestion du stockage d'énergie (300B) calcule également une capacité prévue (precap@t_crit) de l'unité de stockage d'énergie au moment t_crit à l'aide de données externes telles que la réduction d'énergie prévue et les prévisions météorologiques et, partant de là, une consommation d'énergie prévue jusqu'au moment t_crit, et, si la capacité prévue atteint un seuil spécifique au site, déclenche, en particulier de manière constante, au cours des itérations suivantes, un avertissement jusqu'à ce que la notification demandant le service d'urgence soit envoyée.

6. Système de gestion d'énergie sur site selon la revendication 5, dans lequel des écarts entre les prévisions précédentes d'une capacité de stockage d'énergie à un moment X et une capacité réelle de stockage d'énergie au moment X sont pris en compte lors du calcul de la capacité prévue de l'unité de stockage d'énergie au moment t_crit, le moment X étant antérieur au moment t_crit dans le temps.

7. Système de gestion d'énergie sur site selon l'une des revendications 1 à 6, le contrôle de la réduction d'énergie (300C) comprenant l'autorisation d'une communication d'un module de réduction d'énergie avec l'au moins un consommateur sur le site cellulaire et le déclenchement d'un transfert de la commande de réduction d'énergie vers l'au moins un consommateur sur le site cellulaire dès qu'une commande externe de réduction d'énergie informe de phases possibles de réduction d'énergie.

8. Système de gestion d'énergie sur site selon la revendication 7, le contrôle de la réduction d'énergie (300C) comprenant la décision pour/contre les étapes de réduction d'énergie, les étapes de réduction d'énergie comprenant le déclenchement, en fonction des données de contrôle respectives, a) de l'arrêt de l'au moins un consommateur, en particulier par étapes, b) de la mise en marche et de l'arrêt de consommateurs sélectionnés définis de l'au moins un consommateur et/ou c) de la régulation à la baisse de consommateurs sélectionnés définis de l'au moins un consommateur.

9. Site cellulaire autonome en énergie dans un réseau cellulaire comprenant au moins une unité d'alimentation en énergie, au moins une unité de stockage d'énergie, au moins une unité émettrice-réceptrice radio en tant qu'au moins un consommateur et au moins un dispositif informatique mettant en œuvre un système de gestion d'énergie sur site (300) selon l'une des revendications précédentes.

10. Site cellulaire autonome en énergie selon la revendication 9, la au moins une unité d'alimentation en énergie comprenant au moins une source d'énergie renouvelable telle qu'une pile à combustible, une cellule solaire, une éolienne et/ou une combinaison de celles-ci.

11. Site cellulaire autonome en énergie selon l'une des revendications 9 ou 10, l'EMS étant en connexion opérationnelle avec un gestionnaire de réseau du réseau cellulaire et configuré pour demander des données spécifiques du site et des données externes au gestionnaire de réseau si nécessaire et/ou avant que le site cellulaire ne soit mis en service et configuré en conséquence, les données spécifiques du site comprenant au moins l'un des éléments suivants : la capacité totale de stockage d'énergie du site cellulaire, la consommation d'énergie maximale du site cellulaire, un laps de temps d'un service d'urgence pour recharger manuellement l'unité de stockage d'énergie, un seuil d'alerte définissant un moment de déclenchement d'un avertissement pour une notification d'urgence potentielle.

12. Procédé de contrôle d'un site cellulaire autonome en énergie dans un réseau cellulaire, le site cellulaire autonome en énergie comprenant au moins une unité d'alimentation en énergie, au moins une unité de stockage d'énergie et, en tant qu'au moins un consommateur, au moins une unité émettrice-réceptrice radio, le procédé comprenant la mise à disposition d'un système de gestion d'énergie sur site (300) selon l'une des revendications 1 à 8, l'intégration ou au moins le couplage opérationnel au site cellulaire autonome en énergie d'une unité de calcul mettant en œuvre le module de logique décisionnelle du système de gestion d'énergie sur site (300) et le module d'interface du système de gestion d'énergie sur site (300), l'exécution du module de logique décisionnelle et le déclenchement, via le module d'interface, en fonction des données de contrôle fournies par le module de logique décisionnelle, de la modification d'un état de fonctionnement du site cellulaire et/ou de la fourniture d'informations sur l'état du site cellulaire en réponse aux données de contrôle fournies par le module de logique décisionnelle, le contrôle du stockage d'énergie (300B) comprenant la surveillance constante, par l'EMS, et l'analyse, par une logique de gestion du stockage d'énergie en tant que composant du module de logique décisionnelle de l'EMS, de la capacité actuelle de stockage (321) du site cellulaire, le calcul, par la logique de gestion du stockage d'énergie, d'un temps de décharge le plus défavorable, t_crit, (322) où l'on estime que l'unité de stockage d'énergie est complètement déchargée, la récupération d'un temps de service à partir des paramètres spécifiques du site (305), le temps de service étant le temps nécessaire pour recharger l'unité de stockage d'énergie par un service d'urgence (325), la comparaison (323) du temps de décharge le plus défavorable (322) avec le temps de service et, si le temps de décharge le plus défavorable est inférieur ou égal au temps de service, l'envoi, par la logique de gestion du stockage d'énergie, d'une notification d'urgence et la demande, par la logique de gestion du stockage d'énergie, au service d'urgence (325) de recharger l'unité de stockage d'énergie.

13. Réseau cellulaire comprenant au moins un site cellulaire autonome en énergie selon l'une des revendications 9 à 11.

14. Produit de programme informatique, comprenant un support de stockage lisible par ordinateur stockant un code de programme, le code de programme pouvant être mis en œuvre et exécuté par au moins un processeur intégré ou au moins couplé de manière opérationnelle à un site cellulaire autonome en énergie d'un réseau cellulaire et, lorsqu'il est exécuté par l'au moins un processeur, entraînant la réalisation d'un procédé selon la revendication 12.
